# EUROPEAN PATENT APPLICATION

(11) **EP 1 491 581 A1**
(43) Date of publication of application: **29.12.2004**
(21) Application number: 03707140.4
(22) Date of filing: 27.02.2003
(51) Int. Cl.: C08L 9/02, C08L 33/06, C08K 5/11

(54) **RUBBER COMPOSITION, VULCANIZABLE RUBBER COMPOSITION, AND VULCANIZATE**

(30) Priority: 27.02.2002 JP 2002052193
(71) Applicant: Zeon Corporation, Tokyo 100-0005 (JP)
(72) Inventor: TOYA, Takashi, Chiyoda-ku, Tokyo 100-0005 (JP); KOMIYAMA, Shinji, Chiyoda-ku, Tokyo 100-0005 (JP); FUJITA, Haruhiko, Chiyoda-ku, Tokyo 100-0005 (JP)
(74) Representative: Albrecht, Thomas, Dr.
(86) International application number: PCT/JP2003/002253
(87) International publication number: WO 2003/072649

(57) **Abstract**

A rubber composition comprising 100 parts by weight of a nitrile group-containing copolymer rubber (1); 10 to 150 parts by weight of particles (2) having an average particle diameter of not larger than 10 µm which are comprised of a polymer comprising as the principal structural units at least one kind of structural units selected from methyl acrylate units and methyl methacrylate units; and 5 to 85 parts by weight of an ester compound (3) formed from a compound (a) represented by the following general formula (1): HOOCRCOOH wherein R represents an alkylene group having 2 to 10 carbon atoms, and an alcohol (b) having one or more ether bonds. This rubber composition gives a rubber vulcanizate having good ozone resistance.

## Description

### DESCRIPTION

Rubber Composition, Vulcanizable Rubber Composition, and Vulcanizate

### Technical Field

This invention relates to a rubber composition having good ozone resistance. More particularly, it relates to a nitrile group-containing copolymer rubber-based rubber composition; a vulvanizable rubber composition comprising said rubber composition and a vulcanizing agent; and a rubber vulcanizate having good ozone resistance, made by vulcanizing the vulcanizable rubber composition.

### Background Art

A nitrile group-containing copolymer rubber is a typical rubber having various uses, but has a problem such that the resistance to ozone is poor, and, it is easily deteriorated unless an antiozonant is incorporated therein. An antiozonant has a function of inhibiting deterioration due to the fact that it captures radicals, generated by ozone, before the radicals react with a rubber molecule. Therefore, an antiozonant itself is deteriorated by ozone and its function is gradually reduced. Thus, an antioxidant can retard deterioration of rubber molecule, but, it cannot completely prevent deterioration and its antiozonant function does not last for a long period of time.

A polyblend comprised of a nitrile group-containing copolymer rubber and a vinyl chloride resin has good ozone resistance and good oil resistance, and hence, it is widely used for a fuel hose and other automobile parts (see U.S. Patent 2,330,353). However, a halogen-containing resin occasionally liberates a halogen upon disposal and tends to cause environmental pollution. Therefore, a new substitute material is eagerly desired.

As substitute materials, polyblends of a nitrile group-containing copolymer rubber with various halogen-free materials have been proposed, which materials include, for example, a polyamide resin (Shinichiro Gotoh, Nippon Gomu Kyokaishi [Society of Rubber Industry, Japan], vol. 73, p247, 2000), a polypropylene resin (Hirokazu, Nippon Gomu Kyokaishi, vol. 38, p7, 1965) and a styrene-acrylonitrile copolymer resin (Toshio Nishi, Nippon Gomu Kyokaishi, vol. 68, p834, 1995). Vulcanizates of these proposed polyblends have poor ozone resistance.

Recently a polyblend of a nitrile group-containing copolymer rubber with a methacrylic acid-modified methyl methacrylate polymer has been proposed in Japanese Unexamined Patent Publication 2001-226527. It is described in this patent publication that a vulcanizate of a polyblend of a nitrile group-containing copolymer rubber with a methyl methacrylate polymer has poor ozone resistance, but, a vulcanizate of a polyblend of a nitrile group-containing copolymer rubber with the methacrylic acid-modified methyl methacrylate polymer has good ozone resistance. However, the ozone resistance has not been improved yet to a satisfying extent with this proposed polyblend.

### Disclosure of the Invention

In view of the foregoing, a primary object of the present invention is to provide a nitrile group-containing copolymer rubber material having an ozone resistance improved to a sufficient extent.

The inventors made extensive researches to achieve the above-mentioned object, and found that a rubber composition comprising a nitrile group-containing copolymer rubber, specific acrylate polymer or methacrylate polymer particles, and a specific plasticizer gives a vuloanizate having highly improved ozone resistance. The present invention has been completed based on the above finding.

Thus, in accordance with the present invention, there are provided:
(I) a rubber composition comprising:
   100 parts by weight of a nitrile group-containing copolymer rubber (1),
   10 to 150 parts by weight of particles (2) having an average particle diameter of not larger than 10 µm which are comprised of a polymer comprising as the principal structural units at least one kind of structural units selected from methyl acrylate units and methyl methacrylate units, and
   5 to 85 parts by weight of an ester compound (3) formed from a compound (a) represented by the following general formula (1),

      Formula (1): HOOCRCOOH

      wherein R represents an alkylene group having 2 to 10 carbon atoms, and an alcohol (b) having one or more ether bonds;
(II) a vulcanizable rubber composition comprising the above-mentioned rubber composition, and a vulcanizing agent; and,
(III) a vulcanizate made by vulcanizing the above-mentioned vulcanizable rubber composition.

### Best Mode for Carrying Out the Invention

The rubber composition of the present invention is characterized as comprising the following three ingredients.
(1) 100 parts by weight of a nitrile group-containing copolymer rubber (hereinafter referred to as "copolymer rubber (1)" when appropriate);
(2) 10 to 150 parts by weight of particles having an average particle diameter of not larger than 10 µm which are comprised of a polymer comprising as the principal structural units at least one kind of structural units selected from methyl acrylate units and methyl methacrylate units (which polymer is hereinafter referred to as "(meth)acrylate polymer" when appropriate); and
(3) 5 to 85 parts by weight of an ester compound formed from a compound (a) represented by the following general formula (1): HOOCRCOOH wherein R represents an alkylene group having 2 to 10 carbon atoms, and an alcohol (b) having an ether bond.

The nitrile group-containing copolymer rubber (1) used in the present invention a rubber prepared by copolymerization of an α,β-ethylenically unsaturated nitrile monomer with a monomer copolymerizable therewith.

The content of α,β-ethylenically unsaturated nitrile monomer units in the nitrile group-containing copolymer rubber is preferably in the range of 10 to 60% by weight, more preferably 12 to 55% by weight and especially preferably 15 to 50% by weight, based on the weight of the nitrile group-containing copolymer rubber. When the content of α,β-ethylenically unsaturated nitrile monomer units is too small, a rubber vulcanizate has poor oil resistance. In contrast, when the content of α,β-ethylenically unsaturated nitrile monomer units is too large, a rubber vulcanizate has poor cold resistance. As specific examples of the α,β-ethylenically unsaturated nitrile monomer, there can be mentioned acrylonitrile, methactylonitrile and α-chloroacrylonitrile. Acrylonitrile is especially preferable.

The monomer to be copolymerized with the α,β-ethylenically unsaturated nitrile monomer for the preparation of the nitrile group-containing copolymer rubber includes, for example, a conjugated diene monomer, a non-conjugated diene monomer, an α-olefin monomer, an aromatic vinyl monomer, a fluorine-containing vinyl monomer, an α,β-ethylenically unsaturated monocarboxylic acid monomer, an α,β-ethylenically unsaturated polycarboxylic acid monomer and anhydrides thereof, an α,β-ethylenically unsaturated carboxylic acid ester monomer, and a copolymerizable antioxidant.

As specific examples of the conjugated diene monomer, there can be mentioned 1,3-butadiene, isoprene, 2,3-dimethyl-1,3-butadiene and 1,3-pentadiene. Of these, 1,3-butadiene is preferable. The non-conjugated diene monomer preferably includes those which has 5 to 12 carbon atoms, and, as specific examples thereof, there can be mentioned 1,4-pentadiene, 1,4-hexadiene, vinylnorbornene and dicyclopentadiene. The α-olefin monomer preferably includes those which has 2 to 12 carbon atoms, and, as specific examples thereof, there can be mentioned ethylene, propylene, 1-butene, 4-methyl-1-pentene, 1-hexene and 1-octene. As specific examples of the vinyl aromatic monomer, there can be mentioned styrene, α-methylstyrene and vinylpyridine. As specific examples of the fluorine-containing vinyl monomer, there can be mentioned fluoroethyl vinyl ether, fluoropropyl vinyl ether, o-trifluoromethylstyrene, vinyl pentafluorobenzoate, difluoroethylene, tetrafluroethylene, trifluoroethyl acrylate and tetrafluoropropyl methacrylate. As specific examples of the α,β-ethylenically unsaturated monocarboxylic acid monomer, there can be mentioned acrylic acid and methacrylic acid. As specific examples of the α,β-ethylenically unsaturated polycarboxylic acid monomer, there can be mentioned itaconic acid, fumaric acid and maleic acid. As specific examples of the α,β-ethylenically unsaturated polycarboxylic acid anhydride monomer, there can be mentioned itaconic anhydride and maleic anhydride.

As specific examples of the α,β-ethylenically unsaturated carboxylic acid ester monomer, there can be mentioned alkyl acrylates and alkyl methacrylates, which have 1 to 18 carbon atoms in the alkyl group, such as methyl acrylate, ethyl acrylate, n-dodecyl acrylate, methyl methacrylate and ethyl methacryalte; alkoxyalkyl acrylates and alkoxyalkyl methacrylates, which have 2 to 12 carbon atoms in the alkoxyalkyl group, such as methoxymethyl acrylate and methoxyethyl methacryalte; cyanoalkyl acrylates and cyanoalkyl methacrylates, which have 2 to 12 carbon atoms in the cyanoalkyl group, such as α-cyanoethyl acrylate, β-cyanoethyl acrylate and cyanobutyl methacryalte; hdroxyalkyl acrylates and hydroxyalkyl methacrylates, which have 1 to 12 carbon atoms in the hydroxyalkyl group, such as 2-hydroxyethyl acrylate, 2-hydroxypropyl acrylate and 2-hydroxyethyl methacryalte; α,β-ethylenically dicarboxylic acid monoalkyl esters such as monoethyl maleate and mono-n-butyl itaconate; α,β-ethylenically dicarboxylic acid dialkyl esters such as dimethyl maleate, dimethyl fumarate, dimethyl itaconate and diethyl itaconate; and amino group-containing α,β-ethylenically unsaturated carboxylic acid esters such as dimethylaminomethyl acryalte and diethylaminoethyl acryalte. As specific examples of the copolymerizable antioxidant, there can be mentioned N-(4-anllinophonyl)acrylamide, N-(4-anilinophenyl)methacrylamide, N-(4-anilinophenyl)-cinnamamide, N-(4-anilinophenyl)crotonamide, N-phenyl-4-(3-vinylbenzyloxy)aniline and N-phenyl-4-(4-vinylbenzyloxy)aniline.

The monomer to be copolymerized with the α,β-ethylenically unsaturated nitrile monomer may be used either alone or as a combination of at least two thereof. The amount of the copolymerized monomer units is preferably in the range of 40 to 90% by weight, more preferably 45 to 88% by weight and especially preferably 50 to 85% by weight, based on the weight of the nitrile group-containing copolymer rubber.

Preferable nitrile group-containing copolymer rubbers (1) are copolymers comprising 10 to 60% by weight, more preferably 12 to 55% by weight of acrylonitrile units and 40 to 90% by weight, more preferably 45 to 88% by weight of 1,3-butadiene units.

The nitrile group-containing copolymer rubber (1) preferably has a halogen content in the range of 0 to 0.5% by weight, more preferably 0 to 0.1% by weight and especially 0% by weight.

The nitrile group-containing copolymer rubber (1) preferably has a Mooney viscosity (ML₁₊₄, 100°C) in the range of 10 to 300, more preferably 20 to 250 and especially preferably 30 to 200. If the Mooney viscosity is too small, a rubber vulcanizate tends to have poor mechanical properties. In contrast, if the Mooney viscosity is too large, a rubber composition is liable to have poor processability.

The process for producing the nitrile group-containing copolymer rubber (1) is not particularly limited. The copolymer rubber (1) may be produced by copolymerizing the above-mentioned monomers by a conventional procedure.

The particles (2) comprised of a methyl acrylate or methyl methacrylate polymer used in the present invention (which particles are hereinafter referred to as "particles (2)" when appropriate) are comprised of a polymer comprising as the principal structural units at least one kind of structural units selected from methyl acrylate units and methyl methacrylate units, and have an average particle diameter of not larger than 10 µm.

The content of the structural units selected from methyl acrylate units and methyl methacrylate units in the (meth)acrylate polymer is in the range of 50 to 100% by weight, preferably 70 to 100% by weight and more preferably 90 to 100% by weight.

The (meth)acrylate polymer constituting the particles (2) may be a methyl acrylate homopolymer or a methyl methacrylate homopolymer, or a copolymer of methyl acrylate with methyl methacrylate, or copolymers of methyl acrylate and/or methyl methacrylate with other copolymerizable monomer or monomers. The monomer copolymerizable with methyl acrylate and/or methyl methacrylate is not particularly limited and includes, for example, acrylic acid ester monomers other than methyl acrylate, methacrylic acid ester monomers other than methyl methacrylate, aromatic vinyl monomers, ethylenically unsaturated nitrile monomers, vinyl ester monomers and vinyl ether monomers.

As specific examples of the acrylic acid ester monomers other than methyl acrylate, and methacrylic acid ester monomers other than methyl methacrylate, there can be mentioned ethyl acrylate, propyl acrylate, butyl acrylate, isobutyl acryalte, tert.-butyl acrylate, 2-ethylhexyl acrylate, octyl acrylate, ethyl methacrylate, propyl methacrylate, butyl methacrylate, isobutyl methacryalte, tert.-butyl methacrylate, 2-ethylhexyl methacrylate and octyl methacrylate. As specific examples of the aromatic vinyl monomer, there can be mentioned styrene, vinyltoluene and α-methylstyrene. As specific examples of the ethylenically unsaturated nitrile monomer, there can be mentioned acrylonitrile and methacrylonitrile. As specific examples of the vinyl ester monomers, there can be mentioned vinyl acetate and vinyl propionate. As specific examples of the vinyl ether monomers, there can be mentioned methyl vinyl ether, ethyl vinyl ether and hydroxybutyl vinyl ether. Of these, methacrylic acid ester monomers other than methyl methacrylate, and ethylenically unsaturated nitrile monomers are preferable. Ethyl methacrylate, propyl methacrylate, butyl methacrylate and acrylonitrile are especially preferable.

The monomer copolymerizable with methyl acrylate and/or methyl methacrylate may be used either alone or as a combination of at least two thereof. The amount of the copolymerized monomer units is in the range of 0 to 50% by weight, preferably 0 to 30% by weight and more preferably 0 to 10% by weight, based on the weight of the (meth)acrylate polymer.

Preferably the copolymerizable monomer is substantially free from a halogen. The (meth)acrylate polymer preferably has a halogen content in the range of 0 to 0.5% by weight, more preferably 0 to 0.1% by weight and especially preferably 0% by weight. The (meth)acrylate polymer preferably has no unsaturated bond in the backbone chain.

The (meth)acrylate polymer preferably contains a crosslink-forming functional group in an amount of 0 to 0.01 equivalent weight, more preferably 0 to 0.005 equivalent weight, based on 100 g of the (math)acrylate polymer. The crosslink-forming functional group is capable of forming intermolecular linkage or intramolecular linkage in the polymer. As specific examples of the crosslink-forming functional group, there can be mentioned an epoxy group, a carboxyl group, an acid anhydride group, an amino group, an imino group, an amido group and a hydroxyl group. Particles of a (meth)acrylate polymer containing a relatively small amount of a crosslink-forming group are dispersed as particles having a smaller diameter in a matrix of the nitrile group-containing copolymer rubber (1) in the rubber composition of the present invention. In contrast, particles of a (meth)acrylate polymer containing a relatively large amount of a crosslink-forming group are liable to be cured by a crosslinking reaction at steps of kneading and drying, and have a large particle diameter, and a resulting rubber vulcanizate has poor ozone resistance. The crosslink-forming groups may be those which have been introduced in the polymer by copolymerization of a monomer having a crosslink-forming group such as acrylic acid or methacrylic acid; those which have been introduced in the polymer by copolymerization of a monomer having an acid anhydride group such as maleic anhydride, followed by hydrolyzing the acid anhydride group to convert it to a carboxyl group; and those which have been introduced after polymerization, for example, by an additional reaction such as maleic addition.

The weight average molecular weight of the (meth)acrylate polymer is not particularly limited, but is preferably in the range of 50,000 to 4,000,000, more preferably 100,000 to 2,000,000 and especially preferably 200,000 to 1,000,000 as measured by gel permeation chromatography and expressed in terms of that of polystyrene. When the weight average molecular weight is too small, a rubber vulcanizate is liable to have poor ozone resistance. In contrast, when the weight average molecular weight is too large, a rubber composition tends to have poor processability and moldability.

The (meth)acrylate polymer preferably has a glass transition temperature and a melting point such that one of which is higher than the other and is not higher than 250°C, more preferably in the range of 100°C to 230°C. Some (meth)acrylate polymers have a glass transition temperature but do not have a melting point. In these polymers, the glass transition temperature preferably satisfies the above-specified conditions. When the glass transition temperature or the melting point is too high or too low, a rubber vulcanizate tends to have poor ozone resistance.

The procedure for producing the (meth)acrylate polymer is not particularly limited, but the (meth)acrylate polymer is preferably produced in a particulate form, for example, by an emulsion or suspension polymerization procedure. In the emulsion or suspension polymerization procedure, a seed polymerization may be adopted.

The particles (2) used in the present invention preferably have an average particle diameter of not larger than 10 µm, preferably not larger than 5 pm and more preferably not larger than 2 µm. When the particle diameter is too large, a rubber vulcanizate has poor resistance. In the case when the (meth)acrylate polymer is produced in the form of particles in the polymerization process, the particle diameter can be controlled by the polymerization conditions. (Moth)acrylate polymer particles of a desirably controlled particle diameter can also be obtained by a procedure wherein a (meth)acrylate polymer in a solid form is pulverized by a pulverizing apparatus such as a jet air pulverizer, a mechanical impinge type pulverizer, a roll mill, a hammer mill or a impeller breaker, and then, the pulverized polymer is classified by a classification apparatus such as a wind classifier or a sieve classifier.

The amount of (meth)acrylate polymer particles (2) is in the range of 10 to 150 parts by weight, preferably 20 to 120 parts by weight and more preferably 25 to 100 parts by weight, based on 100 parts by weight of the nitrile group-containing copolymer rubber (1). If the amount of particles (2) is too small, a rubber vulcanizate has poor ozone resistance. In contrast, if the amount of particles (2) is too large, a rubber vulcanizate has poor rubber elasticity.

The nitrile group-containing copolymer rubber-based rubber composition of the present invention further comprises an ester compound (3) formed from a compound (a) represented by the following general formula (1): HOOCRCOOH wherein R represents an alkylene group having 2 to 10 carbon atoms, and an alcohol (b) having one or more ether bonds.

In the compound (a) represented by the formula (1) (which compound is hereinafter referred to merely as "compound (a) " when appropriate), R is preferably a straight chain alkylene group, and more preferably a straight chain alkylene group having carboxyl groups at both terminals. The alkylene group R in the compound (a) has 2 to 10 carbon atoms, preferably 4 to 8 carbon atoms. When the carbon number of the alkylene group is too small, a rubber vulcanizate has poor ozone resistance. In contrast, when the carbon number of the alkylene group is too large, a rubber composition has poor processability and the ester compound (3) tends to bleed on the surface of a rubber vulcanizate. As specific examples of the compound (a), there can be mentioned succinic acid, glutaric acid, methylsuccinic acid, adipic acid, dimethylsuccinic acid, pimeric acid, suberic acid, tetramethylsuccinic acid, azelaic acid and sebacic acid.

The alcohol (b) having one or more ether bonds (hereinafter abbreviated to merely as "alcohol (b)" when appropriate) is preferably a monohydric alcohol having 4 to 10 carbon atoms and more preferably 6 to 8 carbon atoms. The number of ether bonds in the alcohol (b) is in the range of 1 to 4, more preferably 1 or 2.

As specific examples of the alcohol (b), there can be mentioned alcohols having 4 carbon atoms and one ether bond such as methoxypropyl alcohol, ethoxyethyl alcohol and propoxymethyl alcohol; alcohols having 4 carbon atoms and 2 ether bonds such as dimethoxyethyl alcohol and methoxyethoxymethyl alcohol; alcohols having 5 carbon atoms and one ether bond such as methoxybutyl alcohol, ethoxypropyl alcohol and propoxyethyl alcohol; alcohols having 5 carbon atoms and 2 ether bonds such as dimethoxypropyl alcohol, methoxyethoxyethyl alcohol and diethoxymethyl alcohol; alcohols having 6 carbon atoms and one ether bond such as butoxyethyl alcohol, propoxypropyl alcohol, ethoxybutyl alcohol, methoxypentyl alcohol and pentoxyethyl alcohol; alcohols having 6 carbon atoms and 2 ether bonds such as dimethoxybutyl alcohol, methoxyethoxyypropyl alcohol and diethoxyethyl alcohol; alcohols having 7 carbon atoms and one ether bond such as butoxypropyl alcohol, propoxybutyl alcohol, ethoxypentyl alcohol and methoxyhexyl alcohol; alcohols having 7 carbon atoms and 2 ether bonds such as dimethoxypentyl alcohol, methoxyethoxybutyl alcohol and methoxypropoxy propane; alcohols having 8 carbon atoms and one ether bond such as pentoxypropyl alcohol, butoxybutyl alcohol, propoxypentyl alcohol, ethoxyhexyl alcohol and methoxyheptyl alcohol; and alcohols having 8 carbon atoms and 2 ether bonds such as butoxyethoxyethyl alcohol, propoxyproxyethyl alcohol, propoxyethoxypropyl alcohol, ethoxypropxypropyl alcohol, methoxybutoxyproyl alcohol and ethoxyethoxybutyl alcohol.

The ester compound (3) may consist of any combination of the compound (a) represented by the above-mentioned general formula (1) with the alcohol (b) having one or more ether bonds. A diester compound is preferable. As specific examples of the diester compound, there can be mentioned dibutoxyethyl adipate and di(butoxyethoxyethyl) adipate. Di(butoxyethoxyethyl) adipate is especially preferable.

The amount of ester compound (3) is in the range of 5 to 85 parts by weight, preferably 15 to 70 parts by weight and more preferably 25 to 60 parts by weight, based on 100 parts by weight of the nitrile group-containing copolymer rubber (1). When the amount of ester compound (3) is too small, a rubber vulcanizate has poor ozone resistance. In contrast, when the amount of ester compound (3) is too large, a rubber vulcanizate has poor rubber elasticity.

The rubber composition of the present invention may comprise ingredients, conventionally incorporated in general rubber compositions, which include, for example, reinforcing agents such as carbon black and silica; fillers such as calcium carbonate, clay, talc and calcium silicate; α,β-unsaturated carboxylic acid metal salts; pigments, antioxidants; rubbers other than the nitrile group-containing copolymer rubber (1); and resins other than the (meth)acrylate polymer (2).

The method for producing the rubber composition of the present invention is not particularly limited. A conventional production method can be adopted. The order in which the ingredients are mixed together is not particularly limited. There can be adopted a dry blending method wherein the ingredients are mixed together at a high temperature by a kneader, and a latex co-precipitation method wherein the nitrile group-containing copolymer rubber (1) and the (meth)acrylate polymer particles (2) are mixed together in a latex state, and then the mixed latex is coagulated. In the latex co-precipitation method, the ester compound (3) may be added either before the mixed latex is coagulated, or, after the mixed latex is coagulated, by a dry blending method.

The vulcanizable rubber composition of the present invention comprises the above-mentioned rubber composition, and a vulcanizing agent. As the vulcanizing agent, sulfur-containing vulcanizers and organic peroxides are generally used. Other vulcanizing agents such as, for example, polyamine vulcanizing agents, can also be used depending upon the kind and amount of the monomer to be copolymerized for the preparation of the nitrile group-containing copolymer rubber (1).

As specific examples of the sulfur-containing vulcanizing agents, there can be mentioned sulfur such as powdery sulfur and precipitated sulfur; and organic sulfur-containing compounds such as 4,4'-dithiomorpholine, tetramethylthiuram disulfide, tetraethylthuram disulfide, and a high-molecular-weight polysulside.

The organic peroxides include dialkyl peroxides, diacyl peroxides and peroxy esters. As specific examples of the organic peroxides, there can be mentioned dialkyl peroxides such as dicumyl peroxide, di-t-butyl peroxide, 2,5-dimethyl-2,5-di(t-butylperoxy)-3-hexyne, 2,5-dimethyl-2,5-di(t-butylperoxy)hexane and 1,3-bis(t-butylperoxyisopropyl)benzene; diacyl peroxides such as benzoyl peroxide and isobutyryl peroxide; and peroxy esters such as 2,5-dimethyl-2,5-bis(benzoylperoxy)hexane and t-butylperoxyisopropyl carbonate.

The amount of vulcanizing agent is in the range of 0.1 to 10 parts by weight, preferably 0.3 to 7 parts by weight and especially preferably 0.5 to 5 parts by weight, based on 100 parts by weight of the nitrile group-containing copolymer rubber. When the amount of vulcanizing agent is too small, a rubber vulcanizate has a low crosslink density and a large permanent set. In contrast, when the amount of vulcanizing agent is too large, a rubber vulcanizate has good flexural fatigue resistance.

In the case when a sulfur-containing vulcanizing agent is used, a vulcanization accelerator is usually used in combination with the vulcanizing agent. The vulcanization accelerator includes, for example, zinc oxide, sulfenamide vulcanization accelerators, guanidine vulcanization accelerators, thiazole vulcanization accelerators, thiuram vulcanization accelerators and dithioic acid salt vulcanization accelerators. The amount of vulcanization accelerator is not particularly limited, and can appropriately be chosen depending upon the use and required properties of a rubber vulcanizate, the kind of sulfur-containing vulcanizing agent and the kind of vulcanization accelerator.

In the case when an organic peroxide vulcanizing agent is used, a vulcanization aid is usually used in combination with the vulcanization aid. As specific examples of the vulcanization aid, there can be mentioned triallyl cyanurate, triallyl isocyanurate, trimethylolpropane trimethacrylate and N,N'-m-phenylenebismaleimide. These vulcanization aids may be used in a state of being dispersed in a filler such as clay, calcium carbonate or silica to prepare a vulcanizable rubber composition having enhanced processability. The amount of vulcanization aid is not particularly limited, and can appropriately be chosen depending upon the use and required properties of a rubber vulcanizate, the kind of vulcanizing agent and the kind of vulcanization aid.

The method for producing the vuloanizable rubber composition of the present invention is not particularly limited. A conventional method can be adopted for the incorporation of the vulcanizing agent.

The rubber vulcanizate of the present invention can be made by vulcanizing the above-mentioned vulcanizable rubber composition at a temperature which is equal to or higher than the vulcanization initiating temperature of the vulcanizing agent, but lower than the permissible upper limit of the temperature of heat-treating the polymer composition. The vulcanization temperature can be determined depending upon the properties of the (metn)acrylate polymer (2), and the vulcanization temperature is preferably in the range of 100 to 200°C, more preferably 130 to 190°C and especially preferably 140 to 180°C, for general vulcanizing agents. When the vulcanization temperature is too low, a long time is required for vulcanization and a rubber vulcanizate tends to have low crosslink density. In contrast, when the vulcanization temperature is too high, defective moldings are liable to be produced.

The vulcanization time varies depending upon the method and temperature of vulcanization and the shape of rubber vulcanizate, but is preferably in the range of one minute to 5 hours, in view of the vulcanization density and production efficiency. Depending upon the shape and size of rubber vulcanizate, surface portion of vulcanizate can easily be vulcanized but the inside of vulcanizate cannot be thoroughly cured. In such a case, secondary vulcanization or post vulcanization can be carried out.

The heating procedure for vulcanization may be appropriately chosen from conventional procedures for vulcanizing rubbers, such as press heating, steam heating, oven heating and hot air heating.

The invention will now be described specifically by the following examples and comparative examples wherein Parts and % are by weight unless otherwise specified.

Properties of (meth)acrylate polymers and rubber vulcanizates were evaluated by the following methods.

Mooney viscosity (ML₁₊₄, 100°C) was measured according to JIS K6300.

Molecular weight of a (meth)acrylate polymer was measured by gel permeation chromatography using tetrahydrofuran as solvent and expressed in terms of that of standard polystyrene.

Glass transition temperature of a (moth)acrylate polymer was measured by differential scanning calorimetry (DSC). The acrylic resins used in the Examples, the Compaartive Examples and the Reference Examples had no melting point.

Particle diameter of a (meth)acrylate polymer was determined by a light scattering particle size analyzer (model N4, available from Coulter Co.)

Ozone resistance was determined according to JIS K6259 when a specimen was left to stand at a temperature of 40°C and an elongation of 30% in an atmosphere having an ozone concentration of 50 pphm for a period of 24 hours, 72 hours and 168 hours. The evaluation results were expressed by the following ratings.

NC: Cracks did not occur.

B-1 through C-5: Alphabet indicates the number of cracks. The number of cracks expressed by "C" is larger than the number of cracks expressed by "B". The larger the figure, the longer the cracks.

Broken: Cracks were too large and a specimen was broken.

### Reference Example 1

A reaction vessel was charged with 150 parts of ion exchanged water, 0.1 part of sodium dodecylbenzenesulfonate as an emulsifier, 0.3 part of ammonium persulfate as a polymerization initiator and 100 parts of methyl methacrylate. While the content was stirred at 80°C, polymerization was carried out for 12 hours. Then the polymerization liquid was cooled to 25°C to stop the polymerization. A portion of the polymerization liquid was taken and the solid content was measured. The polymerization conversion was 98.3% and the solid content was about 39%.

The thus-obtained methyl methacrylate homopolymer particles A were finely divided particles having an average particle diameter of about 0.1 µm. The weight average molecular weight of the polymer was about 1,100,000 as measured by gel permeation chromatography using tetrahydrofuran as a solvent and expressed in terms of that of standard polystyrene. The glass transition temperature of the polymer was 106°C.

### Reference Example 2

A reaction vessel was charged with 160 parts of deionized water, 33 parts of acrylonitrile, 67 parts of butadiene, 2 parts of potassium oleate as an emulsifier, 0.1 part of potassium phosphate as a stabilizer, 0.27 part of dodecyl mercaptan as a molecular weight modifier, 0.015 part of ferrous sulfate as an activator and 0.05 part of p-menthane hydroperoxide as a polymerization initiator. While the content was thoroughly stirred, an emulsion polymerization was initiated at a temperature of 9°C. When about 12 hours elapsed and the polymerization conversion reached 85%, 0.2 part of hydroxylamine sulfate salt was added to stop the polymerization. Steam was blown into the vessel to remove a residual monomer, and 2 parts of 2,6-di-tert-butyl-4-methylphenol as an antioxidant was added to give an aqueous dispersion of an acrylonitrile-butadiene copolymer. A portion of the polymer dispersion was taken and the solid content was measured. The solid content was 35%.

The thus-obtained acrylonitrile-butadiene copolymer had a Mooney viscosity of 85 and an acrylonitrile unit content of 33%.

### Reference Example 3

A stirring vessel was charged with 1,000 parts of water and 5 parts of calcium chloride, and then, 285 parts of the nitrile group-containing copolymer dispersion as obtained in Reference Example 2 was added to coagulate the polymer. The thus-obtained crumb was taken and washed with water and then dried to give a nitrile group-containing copolymer.

### Reference Example 4

A stirring vessel was charged with 300 parts of water, 20 parts of potassium oleate and 300 parts of di(butoxyethoxyethyl) adipate, and the content was thoroughly stirred to give 620 parts of an aqueous emulsion.

### Example 1

110 parts of polymerization liquid obtained in Reference Example 1 was mixed together with 285 parts of the polymer dispersion obtained in Reference Example 2, and then, 62 parts of the aqueous emulsion obtained in Reference Example 4 was added to give 458 parts of a mixed liquid. To 458 parts of this mixed liquid, 1,500 parts of water and 7 parts of calcium chloride were added. The thus-obtained crumb was taken and washed with water and then dried at 50°C under a reduced pressure to give a rubber composition.

The rubber composition was wound around a roll at 45°C, and, to the rubber composition, 60 parts of carbon black ("Asahi #50" available from Asahi Carbon K.K.), 5 parts of dioctyl phthalate, 1 part of stearic acid, 5 parts of zinc oxide (zind flower #1), 0.5 part of sulfur (finely divided particles having passed through a 325 mesh sieve), 1.5 parts of N-cyclohexyl-2-benzothiazolylsulfenamide and 1.5 parts of tetramethylthiuram disulfide were added. The mixture was milled together to give a vulcanizable rubber composition.

The vulcanizable rubber composition was pressed at 160°C for 20 minutes whereby molding and vulcanization were carried out simultaneously to prepare a sheet-form rubber vulcanizate having a thickness of 2 mm. The sheet-form rubber vulcanizate was punched to prepare a specimen. Ozone resistance and bleed resistance were evaluated. The results are shown in Table 1.

### Example 2

By the same procedures as mentioned in Example 1, a vulcanizable rubber composition was prepared and a rubber vulcanizate was made from the composition wherein the amount of the polymerization liquid of methyl methacrylate polymer was changed to 77 parts with all other conditions remaining the same. Properties of the rubber vulcanizate were evaluated. The results are shown in Table 1.

### Example 3

By the same procedures as mentioned in Example 1, a vulcanizable rubber composition was prepared and a rubber vulcanizate was made from the composition wherein the amount of the aqueous emulsion prepared in Reference Example 4 was changed to 83 parts with all other conditions remaining the same. Properties of the rubber vulcanizate were evaluated. The results are shown in Table 1.

### Example 4

By the same procedures as mentioned in Example 1, a vulcanizable rubber composition was prepared and a rubber vulcanizate was made from the composition wherein 100 parts of the nitrile group-containing copolymer rubber obtained in Reference Example 3, 40 parts of methyl methacrylate polymer particles B ("Acryl-paste F320", available from Zeon Kasei K.K., average particle diameter: 1 µm, weight average molecular weight: about 3,000,000, glass transition temperature: 107°C) and 30 parts of di(butoxyathoxyethyl) adipate were milled together by a roll at 45°C to prepare a rubber composition. All other conditions remained the same. Properties of the rubber vulcanizate were evaluated. The results are shown in Table 1.

### Comparative Example 1

By the same procedures as mentioned in Example 1, a vulcanizable rubber composition was prepared and a rubber vulcanizate was made from the composition wherein the aqueous emulsion prepared in Reference Example 4 was not incorporated with all other conditions remaining the same. Properties of the rubber vulcanizate were evaluated. The results are shown in Table 1.

### Comparative Example 2

By the same procedures as mentioned in Example 1, a vulcanizable rubber composition was prepared and a rubber vulcanizate was made from the composition wherein the amount of the aqueous emulsion prepared in Reference Example 4 was changed to 237 parts with all other conditions remaining the same. Properties of the rubber vulcanizate were evaluated. The results are shown in Table 1.

### Comparative Example 3

By the same procedures as mentioned in Example 1, a vulcanizable rubber composition was prepared and a rubber vulcanizate was made from the composition wherein di-2-ethylhexyl adipate was used instead of di(butoxyethoxyethyl) adipate with all other conditions remaining the same. Properties of the rubber vulcanizato were evaluated. The results are shown in Table 1.

### Comparative Example 4

By the same procedures as mentioned in Example 1, a vulcanizable rubber composition was prepared and a rubber vulcanizate was made from the composition wherein di-2-ethylhexyl phthalate was used instead of di(butoxyethoxyethyl) adipate with all other conditions remaining the same. Properties of the rubber vulcanizate were evaluated. The results are shown in Table 1.

### Comparative Example 5

By the same procedures as mentioned in Example 1, a vulcanizable rubber composition was prepared and a rubber vulcanizate was made from the composition wherein tri-2-ethylhexyl phosphate was used instead of di(butoxyethoxyethyl) adipate with all other conditions remaining the same. Properties of the rubber vuloanizate were evaluated. The results are shown in Table 1.

### Comparative Example 6

By the same procedures as mentioned in Example 1, a vulcanizable rubber composition was prepared and a rubber vulcanizate was made from the composition wherein 100 parts of the nitrile group-containing copolymer rubber obtained in Reference Example 3, 40 parts of methyl methacrylate polymer particles C ("Acryl-paste F360", available from Zeon Kasei K.K., average particle diameter: 35 µm, weight average molecular weight: about 3,000,000, glass transition temperature: 107°C) and 30 parts of di(butoxyethoxyethyl) adipate were milled together by a roll at 45°C to prepare a rubber composition. All other conditions remained the same. Properties of the rubber vulcanizate were evaluated. The results are shown in Table 1.

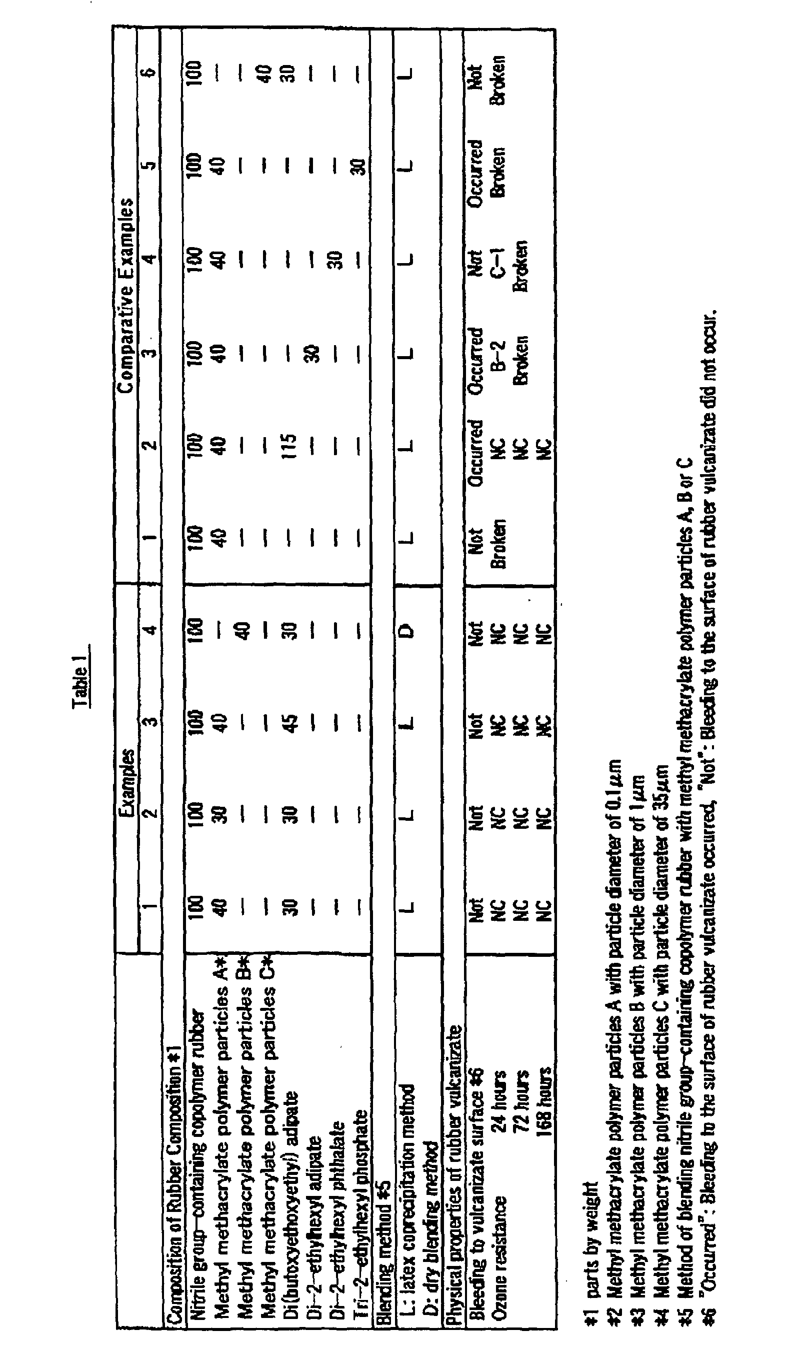

Dry physical properties of rubber vulcanizates prepared in the Examples and the Comparative Examples, other than rubber vulcanizates prepared in Comparative Examples 1 and 2, were approximately the same as those of general rubbers.

As seen from Table 1, a rubber vulcanizate containing no plasticizer (Comparative Example 1) has poor ozone resistance. A rubber vulcanizate made from a rubber composition containing too large amount of di(butoxyethoxyethyl) adipate (Comparative Example 2) exhibits good ozone resistance, but di(butoxyethoxyethyl) adipate easily bleeds to the surface of the rubber vulcanizate and may contaminate the environment. Rubber vulcanizates containing a plasticizer other than the ester compound (3) (Comparative Examples 3, 4 and 5) have poor ozone resistance, and some of the vulcanizates (Comparative Examples 3 and 5) exhibit undesirable bleeding of the plasticizer. A rubber vulcanizate prepared by using (meth)aorylate polymer particles with a large particle diameter (Comparative Example 6) has poor ozone resistance.

In contrast, the rubber vulcanizates of the present invention (Examples 1 to 4) have good ozone resistance.

### Industrial Applicability

The rubber vulcanizates made from the nitrile group-containing copolymer rubber-based rubber composition of the present invention has good ozone resistance.

Therefore, the rubber vulcanizates are used for industrial parts such as rolls, hoses, belts and sealing materials, and are especially suitable for automobile rubber parts such as packings, fuel hoses, air-intake hoses, air-duct hoses, boot materials, oil seals and automobile interior parts.

## Claims

1. A rubber composition comprising:
100 parts by weight of a nitrile group-containing copolymer rubber (1),
10 to 150 parts by weight of particles (2) having an average particle diameter of not larger than 10 µm which are comprised of a polymer comprising as the principal structural units at least one kind of structural units selected from methyl acrylate units and methyl methacrylate units, and
5 to 85 parts by weight of an ester compound (3) formed from a compound (a)represanted by the following general formula (1),
Formula (1): HOOCRCOOH
wherein R represents an alkylene group having 2 to 10 carbon atoms, and an alcohol (b) having one or more ether bonds.

2. The rubber composition according to claim 1, wherein the nitrile group-containing copolymer rubber (1) is a copolymer comprising 10 to 60% by weight of α,β-ethylenically unsaturated nitrile monomer units and 40 to 90% by weight of units of at least one kind of monomer selected from conjugated diene monomers, non-conjugated diene monomers, α-olefin monomers, aromatic vinyl monomers, fluorine-containing vinyl monomers, α,β-ethylenically unsaturated monocarboxylic acid monomers, α,β-ethylenically unsaturated polycarboxylic acid monomers and anhydrides thereof, α,β-ethylenically unsaturated carboxylic acid ester monomers, and copolymerizable antioxidants.

3. The rubber composition according to claim 1, wherein the nitrile group-containing copolymer rubber (1) is a copolymer comprising 10 to 60% by weight of acrylonitrile units and 40 to 90% by weight of 1,3-butadiene units.

4. The rubber composition according to claim 1, wherein the nitrile group-containing copolymer rubber (1) is a copolymer comprising 12 to 55% by weight of acrylonitrile units and 45 to 88% by weight of 1,3-butadiene units.

5. The rubber composition according to any one of claims 1 to 4, wherein the nitrile group-containing copolymer rubber (1) has a halogen content in the range of 0 to 0.5% by weight.

6. The rubber composition according to any one of claims 1 to 5, wherein the nitrile group-containing copolymer rubber (1) has a Mooney viscosity (ML₁₊₄, 100°C) in the range of 10 to 300.

7. The rubber composition according to any one of claims 1 to 6, wherein the polymer constituting the particles (2) is a polymer comprising 50 to 100% by weight of units of at least one kind of monomer selected from methyl acrylate and methyl methacrylate and 0 to 50% by weight of units of at least one kind of monomer selected from acrylic acid ester monomers other than methyl acrylate, methacrylic acid ester monomers other than methyl methacrylate, aromatic vinyl monomers, ethylenically unsaturated nitrile monomers, vinyl ester monomers and vinyl ether monomers.

8. The rubber composition according to any one of claims 1 to 7, wherein the polymer constituting the particles (2) has a halogen content in the range of 0 to 0.5% by weight.

9. The rubber composition according to any one of claims 1 to 8, wherein the polymer constituting the particles (2) contains a crosslink-forming functional group in an amount of 0 to 0.01 equivalent weight based on 100 g of the polymer constituting the particles (2).

10. The rubber composition according to any one of claims 1 to 9, wherein the polymer constituting the particles (2) has a weight average molecular weight in the range of 50,000 to 4,000,000 as measured by gel permeation chromatography and expressed in terms of that of polystyrene.

11. The rubber composition according to any one of claims 1 to 10, wherein the polymer constituting the particles (2) has a glass transition temperature and a melting point, one of which is higher than the other and not higher than 250°C.

12. The rubber composition according to any one of claims 1 to 11, wherein the particles (2) have an average particle diameter of not larger than 5 µm.

13. The rubber composition according to any one of claims 1 to 12, wherein the amount of particles (2) is in the range of 20 to 120 parts by weight based on 100 parts by weight of the nitrile group-containing copolymer rubber (1).

14. The rubber composition according to any one of claims 1 to 13, wherein R in the general formula (1) representing the compound (a) is a straight chain alkylene group having 4 to 8 carbon atoms.

15. The rubber composition according to any one of claims 1 to 14, wherein the alcohol (b) is a monohydrioc alcohol having 1 to 4 ether bonds and 4 to 10 carbon atoms.

16. The rubber composition according to any one of claims 1 to 15, wherein the ester compound (3) is a diester.

17. The rubber composition according to any one of claims 1 to 16, wherein the amount of ester compound (3) is in the range of 15 to 70 parts by weight based on 100 parts by weight of the nitrite group-containing copolymer rubber (1).

18. A vulcanizable rubber composition comprising the rubber composition as claimed in any one of claims 1 to 17, and a vulcanizing agent.

19. The vulcanizable rubber composition according to claim 18, which comprises 0.1 to 10 parts by weight, based on 100 parts by weight of the nitrile group-containing copolymer rubber, of a vulcanizing agent selected from sulfur-containing vulcanizing agents and organic peroxides.

20. A vulcanizate made by vulcanizing the vulcanizable rubber composition as claimed in claim 18 or 19.
